# FASCICULE DE BREVET EUROPEEN

(11) **EP 4 463 310 B1**
(45) Date de publication et mention de la délivrance du brevet: **19.11.2025**
(21) Numéro de dépôt: 22847620.6
(22) Date de dépôt: 30.12.2022
(51) Int. Cl.: B29C 70/38, B29C 70/24, F01D 5/28, B29C 70/54, F01D 5/30, B64C 11/04

(54) **TETE D'APPLICATION POUR LE PLACEMENT AUTOMATIQUE DE FIBRES**
AUFTRAGSKOPF ZUM AUTOMATISCHEN AUFTRAGEN VON FASERN
APPLICATION HEAD FOR AUTOMATICALLY APPLYING FIBRES

(30) Priorité: 12.01.2022 FR 2200223
(43) Date de publication de la demande: 20.11.2024
(73) Titulaire: SAFRAN, 75015 Paris (FR); Safran Nacelles, 76700 Gonfreville-l'Orcher (FR)
(72) Inventeur: DUNLEAVY, Patrick, 77550 Moissy-Cramayel (FR); DESJOYEAUX, Bertrand, Léon, Marie, 77550 Moissy-Cramayel (FR)
(74) Mandataire: Cabinet Beau de Loménie
(86) Numéro de dépôt international: PCT/FR2022/052520
(87) Numéro de publication internationale: WO 2023/135375

(56) Documents cités:
- CA-A1- 3 051 884
- US-B2- 9 757 904

## Description

### Domaine Technique

L'invention concerne une tête d'application pour placement automatique de fibres qui est apte à déposer des fibres dans une orientation prédéfinie, transversale à la direction de déplacement du rouleau applicateur afin de permettre d'obtenir une orientation du renfort souhaitée pour des pièces en matériau composite de géométrie particulière et de taille importante, comme des aubes ou hélices ayant un pied présentant une surépaisseur.

### Technique antérieure

Les pièces aéronautiques en matériau composite comprennent un renfort fibreux qui peut être fabriqué par tissage. Néanmoins lorsque ces pièces ont des dimensions importantes, la fabrication du renfort par tissage peut être compliquée. Cela peut en particulier être le cas d'hélices propulsives pour des structures sans carter (dites « open-rotor »). Ces hélices peuvent classiquement pivoter autour de l'axe en ayant un pied de fixation au disque ayant une partie de surépaisseur, dit « pied bulbe » ou « pied tulipe », ayant par exemple une forme sphérique qui peut être difficile à fabriquer par tissage tridimensionnel.

Les méthodes de placement automatique de fibres (« Automated Fiber Placement » dites « AFP ») peuvent être envisagées pour former de telles pièces en vue de répondre aux limitations des techniques de tissage. Néanmoins, on peut rencontrer avec les méthodes classiques un problème d'encombrement de la tête de machine de dépose au niveau du cou, c'est-à-dire la zone de diamètre réduit juste au-dessus du pied tulipe. En effet, lorsque la tête effectue un mouvement selon l'axe longitudinal de la pièce, la tête risque alors de toucher le cou de la pièce. Une solution est de modifier localement la forme de la pièce mais cette dernière étant établie pour une fonction particulière, cette démarche n'est pas complètement satisfaisante. US9757904B2 divulgue la préambule de la revendication 1.

L'invention propose de répondre aux limitations des techniques antérieures.

### Exposé de l'invention

L'invention concerne une tête d'application pour le placement automatique de fibres, comprenant au moins :
- un rouleau applicateur destiné à l'application des fibres sur une forme et mobile en rotation autour de son axe pour l'application des fibres sur la forme, et
- un dispositif d'alimentation comprenant un enroulement d'une bande de fibres à orientation prédéfinie, ladite bande de fibres étant configurée pour être transférée par déroulement du dispositif d'alimentation vers le rouleau applicateur avec une partie au moins des fibres de la bande orientées de manière non perpendiculaire à l'axe du rouleau.

L'invention met en œuvre, de manière caractéristique, une bande de fibres avec une orientation prédéfinie qui permet de réaliser le dépôt de celles-ci transversalement au déplacement du rouleau applicateur (lequel est perpendiculaire à son axe) et non parallèlement à ce déplacement comme dans les techniques de placement automatique de fibres classiques. De la sorte et comme il sera décrit plus en détails dans la suite, l'invention permet d'accéder à une large variété d'orientations du renfort pour des géométries particulières, telles qu'un pied tulipe, sans risque que la tête ne touche la forme utilisée pour la fabrication de la pièce. L'invention permet ainsi d'optimiser la fabrication du renfort pour des formes de pièces de formes variées.

Dans un exemple de réalisation, la tête comprend en outre un rouleau pré-applicateur en amont du rouleau applicateur apte à être déplacé entre une position rétractée configurée pour ne pas appliquer la bande sur la forme et une position de dépôt configurée pour appliquer la bande sur la forme.

La position de dépôt permet d'assurer un début d'application de la bande sur la forme et la position rétractée permet laisser plus de liberté cinématique de mouvement de la tête vis-à-vis de la surface à draper. Le rouleau pré-applicateur peut être mobile transversalement à la surface de la forme.

Dans un exemple de réalisation, la bande est revêtue d'un film séparateur et la tête comprend en outre un dispositif de détachement apte à détacher le film séparateur de la bande en amont du rouleau applicateur.

Une telle caractéristique permet avantageusement d'utiliser une bande imprégnée de résines ayant un pouvoir collant à température ambiante et de s'affranchir de la nécessité de chauffer la bande lors de son dépôt sur la forme. La bande peut être imprégnée par le matériau de matrice ou par un précurseur de ce matériau, ou par un liant destiné à donner du pouvoir collant pour la dépose des fibres mais ne constituant pas ou pas totalement la matrice à obtenir. Par ailleurs, le film séparateur peut avoir une fonction de support permettant de maintenir les fibres orientées. Le dispositif de détachement peut être apte à enrouler le film séparateur détaché.

Dans un exemple de réalisation, les fibres de la bande forment un angle inférieur ou égal à 45°, par exemple inférieur ou égal à 30°, avec l'axe du rouleau, par exemple sont sensiblement parallèles à l'axe du rouleau.

Dans un exemple de réalisation, la tête comprend en outre un dispositif de découpe apte à découper la bande.

Le dispositif de découpe permet de découper la bande à la fin de chaque phase de dépose. On notera que la présence de ce dispositif de découpe est optionnelle pour des fibres de la bande formant un angle faible par rapport à l'axe du rouleau pour lesquelles l'arrêt de la fourniture de la bande alors que le rouleau applicateur continue d'avancer peut suffire à séparer la portion de bande déposée de la portion présente sur le rouleau non encore déposée.

Dans un exemple de réalisation, la bande comprend au moins une première couche de fibres ayant une première orientation prédéfinie et une deuxième couche de fibres, superposée à la première couche de fibres, ayant une deuxième orientation prédéfinie distincte de la première orientation.

Une telle configuration de machine permet de déposer de façon organisée simultanément plusieurs couches de fibres sans plissures et donne accès à une orientation du renfort plus complexe permettant de mieux s'adapter aux besoins. Ainsi on combine à la fois une tenue mécanique optimisée d'ensemble et un temps de drapage réduit.

**Dans un exemple** de réalisation, la tête comprend en outre au moins un deuxième dispositif d'alimentation apte à fournir un ou plusieurs rubans de fibres configurés pour être transférés du deuxième dispositif d'alimentation vers le rouleau applicateur avec les fibres de ce ou ces rubans orientées perpendiculairement à l'axe du rouleau. Une telle caractéristique concerne une tête d'application « hybride » capable de déposer, simultanément ou de manière séquentielle, des rubans orientés le long du déplacement du rouleau, tels qu'utilisés dans les techniques AFP classiques, et des bandes de fibres orientées transversalement à ce déplacement. Une telle tête est particulièrement adaptée à la fabrication de pièces de forme complexe nécessitant des alternances d'orientations de fibres, notamment des aubes et pieds d'aube. Dans la suite ces rubans pourront être désignés sous le terme de « rubans AFP ». L'invention vise également un procédé de fabrication d'une préforme fibreuse par placement automatique de fibres mettant en œuvre une tête d'application telle que décrite plus haut, comprenant au moins le dépôt de la bande de fibres sur la forme par le rouleau applicateur, une partie au moins des fibres de la bande étant déposées transversalement à une direction de déplacement du rouleau applicateur. En particulier, le procédé peut en outre comprendre le dépôt du ou des rubans sur la forme par le rouleau applicateur, séquentiellement ou simultanément au dépôt de la bande, les fibres de ce ou ces rubans pouvant être déposées le long de la direction de déplacement du rouleau applicateur.

Ce cas concerne le cas où la préforme est réalisée à l'aide d'une même tête d'application (tête « hybride » évoquée plus haut) qui embarque à la fois le ou les rubans AFP et la bande fibreuse. On ne sort bien entendu pas du cadre de l'invention si l'on utilise pour former la préforme fibreuse une première tête d'application embarquant la bande fibreuse orientée telle que décrite plus haut, et une deuxième tête d'application distincte embarquant le ou les rubans de fibres correspondant à une tête d'application classique AFP.

En particulier, une largeur de la bande de fibres déposée peut être supérieure à une largeur totale du ou des rubans de fibres déposés.

Selon cet exemple, les fibres transversales recouvrent, en s'étendant au-delà, le ou les rubans ce qui permet avantageusement d'assurer une continuité de tenue mécanique par leur collage avec les drapages superposés et décalés.

Dans un exemple de réalisation, la préforme fibreuse est une préforme d'un pied tulipe d'aube ou d'hélice et la tête est déplacée au moins autour d'un axe longitudinal de la forme pour réaliser le placement de fibres permettant de former la préforme fibreuse.

L'invention trouve un intérêt particulier pour la formation d'un pied tulipe car elle permet en particulier de fabriquer une structure à propriétés mécaniques optimisées présentant un pied épais et une continuité avec la partie de pale.

L'invention vise également une préforme d'un pied tulipe d'aube ou d'hélice susceptible d'être obtenue par mise en œuvre du procédé tel que décrit plus haut, comprenant au moins un premier ensemble de portions de bande fibreuse dont les fibres sont orientées avec une composante non nulle le long d'un axe longitudinal du pied tulipe, et un deuxième ensemble de portions de rubans fibreux dont les fibres sont orientées de manière circonférentielle autour de cet axe longitudinal et sont transversales aux fibres du premier ensemble.

### Brève description des dessins

[Fig. 1] La figure 1 représente, de manière schématique et partielle, un exemple d'une tête d'application pour le placement automatique de fibres selon l'invention.
[Fig. 2] La figure 2 représente les orientations des fibres déposées à l'aide de la tête de la figure 1 par rapport à l'axe du rouleau applicateur et à sa direction de déplacement.
[Fig. 3] La figure 3 représente une autre orientation possible pour les fibres de la bande fibreuse.
[Fig. 4] La figure 4 représente, de manière schématique et partielle, une variante d'une tête d'application selon l'invention.
[Fig. 5] La figure 5 représente, de manière schématique et partielle, la formation d'une préforme fibreuse d'un pied tulipe d'aube ou d'hélice à l'aide d'une tête d'application selon l'invention.
[Fig. 6] La figure 6 illustre une préforme de pied tulipe selon l'invention.
[Fig. 7] La figure 7 représente, de manière schématique et partielle, une variante de bande multicouches à fibres orientées utilisable dans le cadre de l'invention.

### Description des modes de réalisation

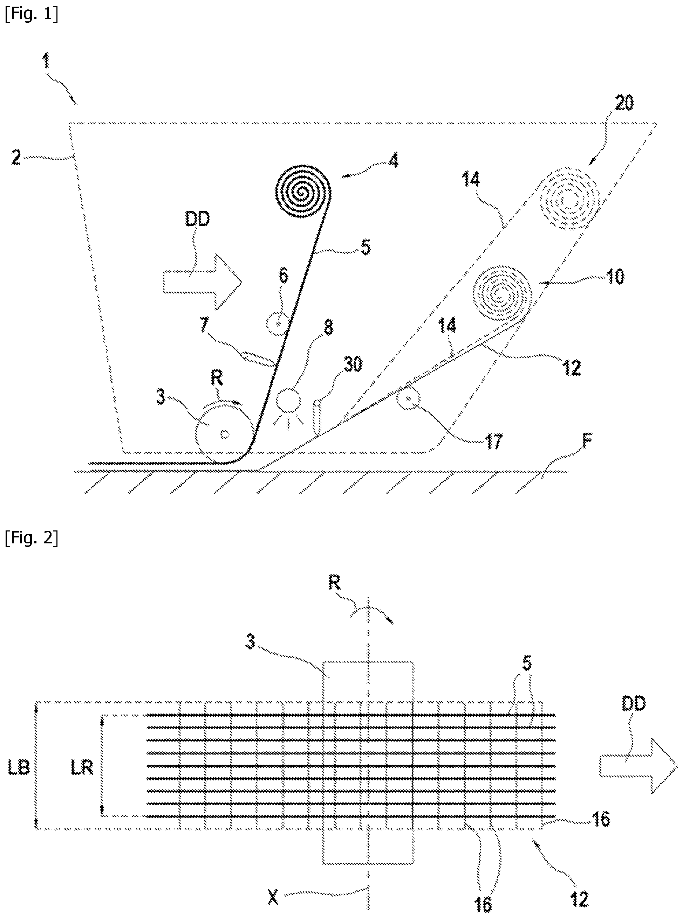

La figure 1 illustre un exemple de tête 1 d'application selon l'invention pour le placement automatique de fibres. Dans l'exemple considéré, la tête 1 comprend un corps 2 renfermant un module de dépôt de rubans AFP ainsi qu'un module de dépôt d'une bande de fibres orientées. La tête 1 est montée sur un système de déplacement et d'orientation lui permettant d'atteindre les mêmes degrés de liberté qu'une tête AFP classique. Le module de dépôt de rubans AFP correspond à une structure classique et comprend, de manière connue en soi, un dispositif d'alimentation 4 apte à fournir des rubans 5 de fibres par exemple sous la forme d'une pluralité de bobines d'alimentation. Les rubans 5 sont transférés par déroulement depuis les bobines jusqu'à un rouleau applicateur 3, lequel est destiné à permettre la dépose sur la forme F. Un élément de guidage 6 est présent afin de faciliter ce transfert tel qu'un ou plusieurs éléments rotatifs munis de gorges de guidage. Le rouleau 3 est déformable de sorte à prendre la courbure locale de la forme F afin de déposer la matière à la géométrie locale souhaitée. Le rouleau 3 a, au repos, une forme généralement cylindrique et est rotatif autour de son axe X, lequel correspond à l'axe de la hauteur du rouleau, lors de son déplacement le long de la forme F. Dans les figures, la direction de déplacement du rouleau 3 le long de la forme F est matérialisée par la flèche DD. La rotation du rouleau 3 lors de la dépose est, quant à elle, matérialisée par la flèche R. Un dispositif de découpe 7 de rubans permet leur découpe à la longueur souhaitée lors de la dépose et un élément de réacheminement (non illustré) est présent pour transférer la partie non encore déposée des rubans jusqu'au rouleau 3 après la découpe. Le dispositif de découpe peut typiquement être une lame coupante simple droite ou tournante, une lame vibrante ultrason ou encore un dispositif de découpe laser. Un organe de chauffage 8 est présent qui permet d'activer le pouvoir adhésif d'une résine présente dans le ruban 5 afin de favoriser son adhésion à la matière déjà déposée. A titre d'exemple, une largeur d'un ruban 5, mesurée perpendiculairement à une direction de déplacement DD du rouleau 3, peut être inférieure ou égale à 25 mm, par exemple comprise entre 3 mm et 25 mm.

Le corps 2 de la tête 1 renferme en outre un dispositif 10 d'alimentation qui comprend un enroulement d'une bande 12 de fibres 16 à orientation prédéfinie. La bande 12 est imprégnée d'une résine destinée à permettre l'adhésion à la matière déposée lors de l'application par le rouleau 3. La bande 12 est ici revêtue d'un film séparateur 14 lequel peut constituer un support pour les fibres de la bande mais peut également assurer une fonction anti-adhérente afin d'éviter une liaison non souhaitée des couches de la bande enroulée avant la dépose notamment lorsqu'une résine collante à température ambiante (20°C) est employée. On ne sort toutefois pas du cadre de l'invention si ce film 14 est omis. De manière similaire au module de rubans 5 AFP, la bande 12 est transférée par déroulement du dispositif d'alimentation 10 vers le rouleau applicateur 3. Parallèlement à ce transfert, le film 14 est détaché avant l'arrivée de la bande 12 au rouleau applicateur 3 par rembobinage par le dispositif de détachement rotatif 20. Un dispositif de découpe 30 est présent pour découper la bande à la longueur souhaitée ainsi qu'un élément de réacheminement (non représenté). On peut également adjoindre un dispositif de guidage 17 comme pour le module AFP si cela est souhaité. On a représenté un même organe de chauffage 8 permettant de chauffer les rubans 5 et la bande 12 lors de leur dépôt mais on ne sort pas du cadre de l'invention si plusieurs organes de chauffage sont présents, respectivement pour les rubans et les bandes. Le choix du nombre et de la position des organes de chauffage est réalisé selon le besoin. On peut également ne pas utiliser d'organe de chauffage si une résine ayant un pouvoir collant à l'ambiante est employée.

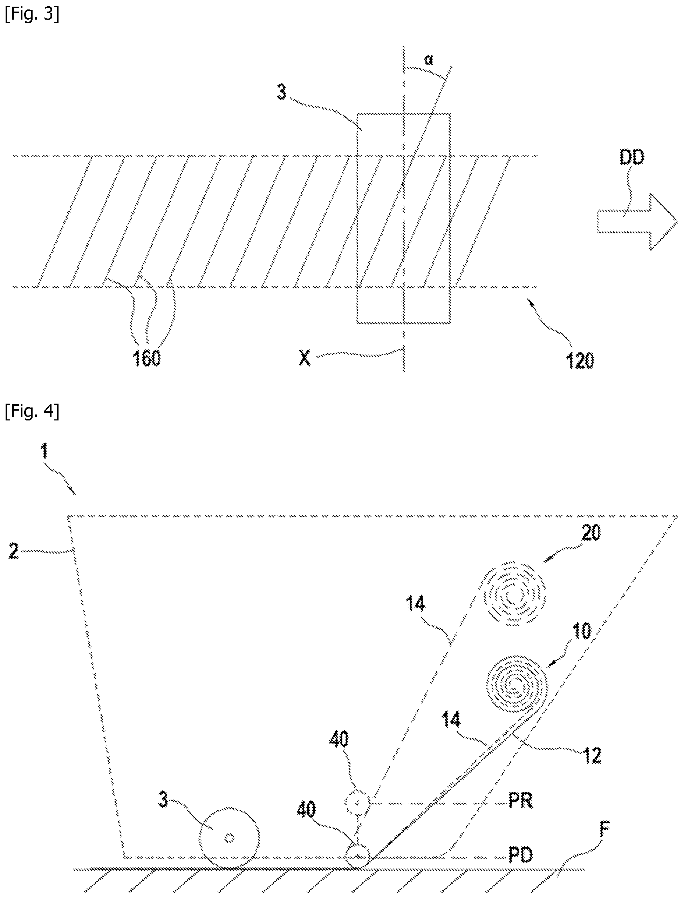

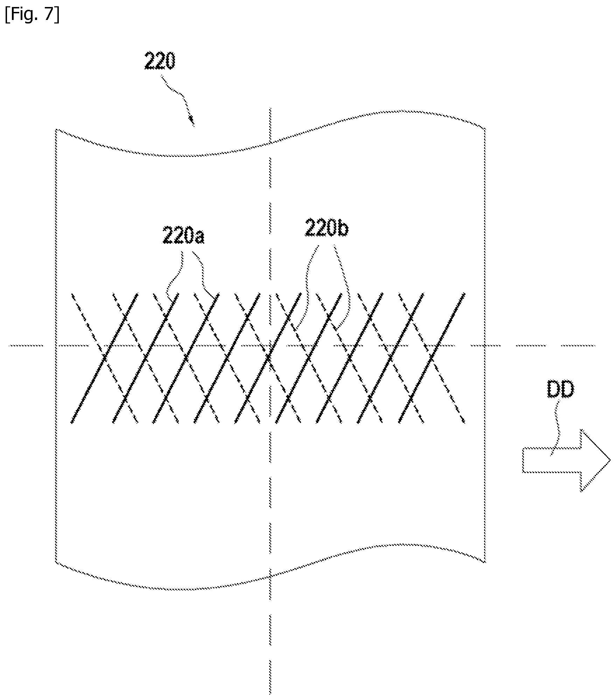

De manière caractéristique, l'orientation des fibres 16 de la bande 12 est prédéfinie de manière particulière et transversale à l'orientation des fibres des rubans AFP. Comme illustré aux figures 2 et 3, l'orientation des fibres 16 au niveau du rouleau 3 est non perpendiculaire à l'axe X, ce qui produit un dépôt de ces fibres orientées transversalement à la direction de déplacement DD. En d'autres termes, les fibres 16 s'étendent le long d'une direction d'élongation qui est non perpendiculaire à l'axe X. Les fibres 16 sont orientées en faisant un angle non nul par rapport à la longueur de la bande 12. La liaison entre les fibres de la bande 12 dans la direction DD peut être relativement faible et conférer une certaine liberté aux fibres 16 de s'écarter les unes des autres et de se déformer en fonction de longueur curviligne à décrire. On a représenté à la figure 2 le cas d'une bande 12 dont les fibres 16 déposées par le rouleau 3 sont orientées sensiblement parallèlement à l'axe X, c'est-à-dire sensiblement perpendiculairement à la direction de déplacement DD. Néanmoins, l'orientation des fibres 16 peut être modulée selon l'orientation souhaitée pour le renfort pour la pièce envisagée. La figure 3 illustre ainsi le cas d'une bande 120 ayant des fibres 160 obliques à l'axe X en formant un angle α non nul et différent de 90° avec cet axe X, cet angle étant par exemple inférieur ou égal à 45°. D'autres orientations sont possibles pour les fibres de la bande comme par exemple le cas d'une bande 220 à au moins deux couches superposées dont les fibres 220a d'une première couche sont orientées avec une première orientation par rapport à l'axe X et dont les fibres 220b d'une deuxième couche superposée à la première couche sont orientées avec une deuxième orientation, distincte de la première orientation, par rapport à l'axe X, par exemple les fibres 220a et 220b sont orientées à +/-30° par rapport à l'axe X (voir figure 7). Dans ce cas, les couches superposées peuvent avoir des largeurs identiques ou différentes. Comme indiqué plus haut, le dispositif de découpe 30 peut être omis dans le cas de fibres 16 fortement inclinées par rapport à la direction DD comme illustrées à la figure 2, par exemple. D'une manière générale, la bande 12 peut comprendre au moins une couche unidirectionnelle de fibres 16 parallèles entre elles. La bande 12 est constituée, préalablement à son montage dans la tête 1, par assemblage et disposition de fibres 16 maintenues entre elles, par exemple par une résine, cet assemblage étant éventuellement réalisé sur le film 14. Les rubans 5 AFP sont quant à eux déposés parallèlement à la direction DD et donc transversalement aux fibres 16. La bande 12 a une largeur LB, mesurée perpendiculairement à la direction DD, qui est supérieure à la largeur de chacun des rubans 5. La largeur de la bande 12 est par exemple supérieure ou égale à 100 mm, par exemple comprise entre 100 mm et 300 mm. Comme illustré à la figure 2, la largeur LB de la bande 12 peut avantageusement être supérieure à la largeur totale (cumulée) LR des rubans 5 déposés. La bande 12 déposée peut comme illustré recouvrir et s'étendre au-delà de la zone couverte par les rubans 5 déposés. D'une manière générale, l'homme du métier déterminera la largeur LB de la bande 12 et le nombre de rubans 5 à déposer en fonction du besoin. D'une manière générale, les rubans 5 et les fibres de la bande 12 peuvent être en carbone ou en verre.

La figure 4 illustre une variante de réalisation dans laquelle le corps 2 de la tête 1 comprend en outre un rouleau pré-applicateur 40 en amont du rouleau 3 qui est apte à être déplacé entre une position rétractée PR dans laquelle il n'appuie pas sur la bande 12 pour la déposer sur la forme, et une position de dépôt PD dans laquelle il applique la bande 12 sur la forme. Dans l'exemple illustré, le rouleau 40 est au-dessus du rouleau 3 dans la position rétractée PR et au niveau du rouleau 3, pour venir appuyer sur la forme F, dans la position de dépôt PD. L'homme du métier reconnaîtra que divers systèmes peuvent être utilisés pour déplacer le rouleau pré-applicateur 40. Comme le rouleau 3, le rouleau 40 pré-applicateur est mobile en rotation autour de son axe.

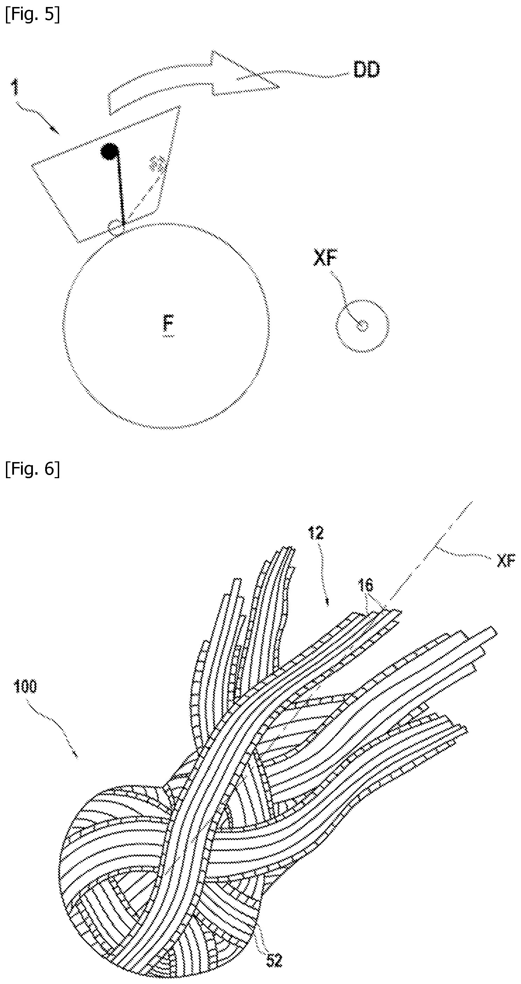

On vient de décrire différents détails relatifs à des exemples de têtes d'application selon l'invention. Bien qu'une tête « hybride » ait été illustrée à la figure 1, on notera que l'on ne sort pas du cadre de l'invention lorsque l'on omet le module AFP et que la tête considérée ne comprend que la bande 12 à déposer par le rouleau 3. La suite s'attache à décrire une utilisation possible d'une tête selon l'invention dans le cas de la fabrication d'un pied tulipe d'aube ou d'hélice en référence aux figures 5 et 6.

La figure 5 illustre la fabrication d'une préforme fibreuse dans laquelle la tête 1 est déplacée autour d'un axe longitudinal XF de la forme F pour réaliser le placement de fibres. On évite ainsi que la tête ne procède à un mouvement le long de l'axe longitudinal XF risquant d'aboutir à un impact de celle-ci avec la pièce en cours de formation. On peut réaliser tout ou partie du drapage en effectuant alternativement le dépôt de rubans 5 et de la bande 12, en quantité, largeurs et directions pour optimiser la performance mécanique de la pièce obtenue. On peut réaliser tout ou partie du drapage en utilisant une machine distribuant simultanément les rubans 5 et la bande de fibres transversales à la direction DD. On a illustré à la figure 6 un exemple de préforme de pied tulipe 100 obtenu dans le cadre de l'invention qui comprend un premier ensemble de portions de bande fibreuse formées par les fibres 16 qui sont orientées avec une composante non nulle le long de l'axe XF et un deuxième ensemble de portions de ruban fibreux dont les fibres 52 sont orientées de manière circonférentielle autour de cet axe et transversales aux fibres 16. On peut avoir une alternance en empilement et positions des portions de bande fibreuse et des portions de rubans fibreux. On peut ainsi obtenir un drapage formant le pied tulipe mais également une partie de la pale si la forme comprend une forme de longeron sur lequel celle-ci est déposée, avec avantageusement une continuité de matière entre la pale et le pied tulipe. On peut ensuite réaliser une cuisson pour faire polymériser la résine imprégnant la préforme et obtenir ainsi la pièce finale. L'invention trouve ainsi un intérêt particulier pour fabriquer, de manière économique et performante, des pièces à forte courbure telles que par exemple des pieds d'aube en forme sphérique comme il vient d'être décrit. Le pied tulipe peut être fabriqué avec une même tête 1 « hybride » permettant la dépose de rubans 5 et de bande 12 mais on ne sort pas du cadre de l'invention si l'on utilise une tête selon l'invention permettant uniquement le dépôt de la bande 12 et une tête AFP classique distincte pour la dépose des rubans 5.

L'expression « comprise entre ... et ... » doit se comprendre comme incluant les bornes.

## Revendications

1. Tête (1) d'application pour le placement automatique de fibres, comprenant au moins :
- un rouleau (3) applicateur destiné à l'application des fibres sur une forme (F) et mobile en rotation autour de son axe (X) pour l'application des fibres sur la forme, et
- un dispositif d'alimentation (10) comprenant un enroulement d'une bande (12) de fibres (16) à orientation prédéfinie, ladite bande de fibres étant configurée pour être transférée par déroulement du dispositif d'alimentation vers le rouleau applicateur avec une partie au moins des fibres de la bande orientées de manière non perpendiculaire à l'axe du rouleau,
**caractérisée en ce que** la tête comprend en outre au moins un deuxième dispositif d'alimentation (4) apte à fournir un ou plusieurs rubans (5) de fibres configurés pour être transférés du deuxième dispositif d'alimentation vers le rouleau applicateur avec les fibres de ce ou ces rubans orientées perpendiculairement à l'axe du rouleau.

2. Tête (1) selon la revendication 1, dans laquelle la tête comprend en outre un rouleau (40) pré-applicateur en amont du rouleau (3) applicateur apte à être déplacé entre une position rétractée (PR) configurée pour ne pas appliquer la bande (12) sur la forme (F) et une position de dépôt (PD) configurée pour appliquer la bande sur la forme.

3. Tête (1) selon la revendication 1 ou 2, dans laquelle la bande (12) est revêtue d'un film (14) séparateur et la tête comprend en outre un dispositif (20) de détachement apte à détacher le film séparateur de la bande en amont du rouleau (3) applicateur.

4. Tête (1) selon l'une quelconque des revendications 1 à 3, dans laquelle les fibres (16) de la bande forment un angle (α) inférieur ou égal à 45° avec l'axe (X) du rouleau.

5. Tête (1) selon l'une quelconque des revendications 1 à 4, dans laquelle la tête comprend en outre un dispositif (30) de découpe apte à découper la bande (12).

6. Tête (1) selon l'une quelconque des revendications 1 à 5, dans laquelle la bande (220) comprend au moins une première couche de fibres (220a) ayant une première orientation prédéfinie et une deuxième couche de fibres (220b), superposée à la première couche de fibres, ayant une deuxième orientation prédéfinie distincte de la première orientation.

7. Procédé de fabrication d'une préforme fibreuse par placement automatique de fibres mettant en œuvre une tête (1) d'application selon l'une quelconque des revendications 1 à 6, comprenant au moins le dépôt de la bande (12) de fibres (16) sur la forme (F) par le rouleau (3) applicateur, une partie au moins des fibres de la bande étant déposées transversalement à une direction (DD) de déplacement du rouleau applicateur.

8. Procédé selon la revendication 7, dans lequel le procédé comprend en outre le dépôt du ou des rubans (5) sur la forme (F) par le rouleau (3) applicateur, séquentiellement ou simultanément au dépôt de la bande (12), les fibres de ce ou ces rubans étant déposées le long de la direction de déplacement (DD) du rouleau applicateur.

9. Procédé selon la revendication 8, dans lequel une largeur (LB) de la bande (12) de fibres (16) déposée est supérieure à une largeur totale (LR) du ou des rubans (5) de fibres déposés.

10. Procédé selon la revendication 7 à 9, dans lequel la préforme fibreuse est une préforme d'un pied tulipe d'aube ou d'hélice et dans lequel la tête (1) est déplacée au moins autour d'un axe (XF) longitudinal de la forme pour réaliser le placement de fibres permettant de former la préforme fibreuse.

11. Préforme fibreuse (100) d'un pied tulipe d'aube ou d'hélice susceptible d'être obtenue par mise en œuvre du procédé selon la revendication 10 rattaché à la revendication 8 ou 9, comprenant au moins un premier ensemble de portions de bande fibreuse dont les fibres (16) sont orientées avec une composante non nulle le long d'un axe longitudinal (XF) du pied tulipe, et un deuxième ensemble de portions de rubans fibreux dont les fibres (52) sont orientées de manière circonférentielle autour de cet axe longitudinal et sont transversales aux fibres du premier ensemble.

## Patentansprüche

1. Applikationskopf (1) für die automatische Platzierung von Fasern, umfassend zumindest:
- eine Applikatorrolle (3), die dazu bestimmt ist, Fasern auf eine Form (F) aufzubringen, und um ihre Achse (X) herum zum Aufbringen der Fasern auf die Form beweglich ist, und
- eine Versorgungsvorrichtung (10), die eine Wicklung eines Streifens (12) von Fasern (16) mit vordefinierter Orientierung umfasst, wobei der Streifen von Fasern dazu ausgestaltet ist, durch Abwickeln von der Versorgungsvorrichtung auf die Applikatorrolle übertragen zu werden, wobei zumindest ein Teil der Fasern des Streifens auf eine Weise orientiert ist, die nicht senkrecht zu der Achse der Rolle steht, **dadurch gekennzeichnet, dass** der Kopf ferner zumindest eine zweite Versorgungsvorrichtung (4) umfasst, die dazu geeignet ist, ein oder mehrere Bänder (5) von Fasern zu liefern, die dazu ausgestaltet sind, von der zweiten Versorgungsvorrichtung auf die Applikatorrolle übertragen zu werden, wobei die Fasern dieses Bandes oder dieser Bänder senkrecht zu der Achse der Rolle orientiert sind.

2. Kopf (1) nach Anspruch 1, wobei der Kopf ferner der Applikatorrolle (3) vorgelagert eine Vor-Applikatorrolle (40) umfasst, die dazu geeignet ist, zwischen einer zurückgezogenen Position (PR), die dazu ausgestaltet ist, den Streifen (12) nicht auf die Form (F) aufzubringen, und einer Ablageposition (PD), die dazu ausgestaltet ist, den Streifen auf die Form aufzubringen, bewegt zu werden.

3. Kopf (1) nach Anspruch 1 oder 2, wobei der Streifen (12) mit einer Trennfolie (14) beschichtet ist und der Kopf ferner eine Ablösevorrichtung (20) umfasst, die dazu geeignet ist, der Applikatorrolle (3) vorgelagert die Trennfolie von dem Streifen abzulösen.

4. Kopf (1) nach einem der Ansprüche 1 bis 3, wobei die Fasern (16) des Streifens einen Winkel (α) von 45° oder weniger mit der Achse (X) der Rolle bilden.

5. Kopf (1) nach einem der Ansprüche 1 bis 4, wobei der Kopf ferner eine Schneidvorrichtung (30) umfasst, die dazu geeignet ist, den Streifen (12) abzuschneiden.

6. Kopf (1) nach einem der Ansprüche 1 bis 5, wobei der Streifen (220) zumindest eine erste Faserschicht (220a), die eine erste vordefinierte Orientierung aufweist, und eine zweite Faserschicht (220b) umfasst, die der ersten Faserschicht überlagert ist und eine zweite vordefinierte Orientierung aufweist, die sich von der ersten Orientierung unterscheidet.

7. Verfahren zur Herstellung einer Faservorform durch automatische Platzierung von Fasern unter Verwendung eines Applikationskopfes (1) nach einem der Ansprüche 1 bis 6, das zumindest das Ablegen des Streifens (12) von Fasern (16) auf der Form (F) durch die Applikatorrolle (3) umfasst, wobei zumindest ein Teil der Fasern des Streifens quer zu einer Bewegungsrichtung (DD) der Applikatorrolle abgelegt wird.

8. Verfahren nach Anspruch 7, wobei das Verfahren ferner das Ablegen des Bandes oder der Bänder (5) auf der Form (F) durch die Applikatorrolle (3), nacheinander oder gleichzeitig mit dem Ablegen des Streifens (12), umfasst, wobei die Fasern dieses Bandes oder dieser Bänder entlang der Bewegungsrichtung (DD) der Applikatorrolle abgelegt werden.

9. Verfahren nach Anspruch 8, wobei eine Breite (LB) des abgelegten Streifens (12) von Fasern (16) größer ist als eine Gesamtbreite (LR) des abgelegten Bandes oder der abgelegten Bänder (5) von Fasern.

10. Verfahren nach Anspruch 7 bis 9, wobei die Faservorform eine Vorform eines Tulpenfußes einer Schaufel oder eines Propellers ist und wobei der Kopf (1) zumindest um eine Längsachse (XF) der Form bewegt wird, um die Platzierung von Fasern zu verwirklichen, was die Bildung der Faservorform ermöglicht.

11. Faservorform (100) eines Tulpenfußes einer Schaufel oder eines Propellers, die durch Durchführung des Verfahrens nach Anspruch 10 in Verbindung mit Anspruch 8 oder 9 erhalten werden kann, umfassend zumindest eine erste Anordnung von Faserstreifenabschnitten, deren Fasern (16) mit einer von Null verschiedenen Komponente entlang einer Längsachse (XF) des Tulpenfußes ausgerichtet sind, und eine zweite Anordnung von Faserstreifenabschnitten, deren Fasern (52) auf um diese Längsachse umlaufende Weise ausgerichtet sind und quer zu den Fasern der ersten Anordnung verlaufen.

## Claims

1. An application head (1) for automated fiber placement, comprising at least:
- an application roller (3) that is intended to apply fibers to a shaping tool (F) which application roller is rotatably movable on its axis (X) for applying fibers to the shaping tool, and
- a feed device (10) comprising a winding of a strip (12) of fibers (16) having a predefined orientation, said strip of fibers being configured to be transferred by unwinding from the feed device onto the application roller with at least one portion of the fibers of the strip being oriented such that they are not perpendicular to the axis of the roller,
**characterized in that** the head further comprises at least a second feed device (4) capable of supplying one or more ribbons (5) of fibers configured to be transferred from the second feed device to the application roller with the fibers of this or these ribbons oriented perpendicular to the axis of the roller.

2. The head (1) according to claim 1, wherein the head further comprises a pre-application roller (40) upstream of the application roller (3) capable of being moved between a retracted position (PR) configured not to apply the strip (12) to the shaping tool (F) and a deposition position (PD) configured to apply the strip to the shaping tool.

3. The head (1) according to claim 1 or 2, wherein the strip (12) is coated with a separator film (14) and the head further comprises a detachment device (20) capable of detaching the separator film from the strip upstream of the application roller (3).

4. The head (1) according to any one of claims 1 to 3, wherein the fibers (16) of the strip form an angle (α) less than or equal to 45° with the axis (X) of the roller.

5. The head (1) according to any one of claims 1 to 4, wherein the head further comprises a cutting device (30) capable of cutting the strip (12).

6. The head (1) according to any one of claims 1 to 5, wherein the strip (220) comprises at least a first layer of fibers (220a) having a first predefined orientation and a second layer of fibers (220b), superimposed on the first layer of fibers, having a second predefined orientation distinct from the first orientation.

7. A method for manufacturing a fibrous preform by automated fiber placement using an application head (1) according to any one of claims 1 to 6, comprising at least the deposition of the strip (12) of fibers (16) on the shaping tool (F) by the application roller (3), at least one portion of the fibers of the strip being deposited transversely to a direction (DD) of movement of the application roller.

8. The method according to claim 7, wherein the method further comprises the deposition of the ribbon(s) (5) on the shaping tool (F) by the application roller (3), sequentially or simultaneously with the deposition of the strip (12), the fibers of this or these ribbons being deposited along the direction of movement (DD) of the application roller.

9. The method according to claim 8, wherein a width (LB) of the deposited strip (12) of fibers (16) is greater than a total width (LR) of the deposited ribbon(s) (5) of fibers.

10. The method according to claim 7 to 9, wherein the fibrous preform is a preform of a blade or propeller tulip root and wherein the head (1) is moved at least around a longitudinal axis (XF) of the shaping tool to achieve the application of fibers allowing to form the fibrous preform.

11. A fibrous preform (100) of a tulip root of a blade or propeller capable of being obtained by implementing the method according to claim 10 attached to claim 8 or 9, comprising at least a first set of fibrous strip portions of which the fibers (16) are oriented with a non-zero component along a longitudinal axis (XF) of the tulip root, and a second set of portions of fibrous ribbons whose fibers (52) are oriented circumferentially around this longitudinal axis and are transverse to the fibers of the first set.
